# EUROPEAN PATENT SPECIFICATION

(11) **EP 1 721 810 B1**
(45) Date of publication and mention of the grant of the patent: **07.01.2009**
(21) Application number: 06251874.1
(22) Date of filing: 03.04.2006
(51) Int. Cl.: B62D 25/08

(54) **Automotive body structure**
Karosserieaufbau für Kraftfahrzeuge
Structure de carrosserie d'un véhicule automobile

(30) Priority: 13.05.2005 JP 2005140645
(43) Date of publication of application: 15.11.2006
(73) Proprietor: HONDA MOTOR CO., LTD., Tokyo 107-8556 (JP)
(72) Inventor: Fukushi, Yoshinori, c/o Honda R&D Co., Ltd., Wako-shi Saitama 351-0193 (JP); Shibaoka, Mikio, c/o Honda R&D Co., Ltd., Wako-shi Saitama 351-0193 (JP)
(74) Representative: Piésold, Alexander James

(56) References cited:
- EP-A- 1 393 936
- DE-A1- 1 911 127
- US-A1- 2004 051 292

## Description

The present invention relates to an automotive body structure which can effectively increase the rigidity of a part thereof supporting a wheel suspension damper.

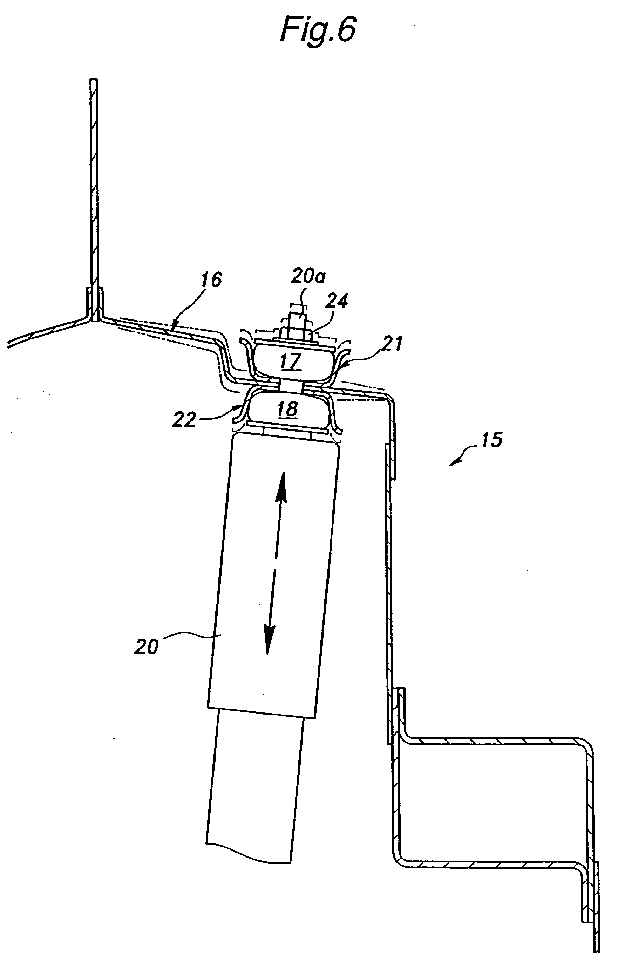

An automotive suspension system essentially consists of a suspension arm, a spring and a damper. The damper is placed in a wheel house typically in an upright orientation, and the upper end thereof is supported by the upper wall of the wheel house (Japanese patent laid open publication No. 2004-92753, also published as EP 1 393 936, describing the preamble to claim 1). The damper is resiliently supported by a damper base of the wheel house via mounting rubbers so as to prevent transmission of oscillations owing to road irregularities and kickbacks from the road surface. For instance, in the arrangement illustrated in Figure 6, cup-shaped rubber holders 21 and 22 are spot welded to the upper and lower surfaces of the damper base 16 provided as a part of an upper wall of the wheel house 15, respectively. And, with mounting rubbers 17 and 18 received in these rubber holders 21 and 22, a rod 20a of a damper 20 is passed through the damper base 16 and the rubber holders 21 and 22, and a nut 24 is threaded onto this rod 20a.

Because the damper applies a vertical impulsive load to the wheel house as the automobile travels over an irregular road surface, if the rigidity of the wheel house is not adequate, the wheel house deforms, and this adversely affects the stability of the motion of the automobile. Therefore, it has been proposed to increase the rigidity of the wheel house by fitting the outboard wall of the wheel house with a damper stiffener (Japanese patent laid open publication No. 07-309252).

In the structure disclosed in Japanese patent laid open publication No. 2004-92753, when a large impulsive load is applied to the damper 20, as shown by the double-dot chain-dot line in Figure 6, because the damper base 16 deforms locally around the part where the rubber holders 21 and 22 are attached, the resulting displacement of the part supporting the damper may adversely affect the motion stability and the ride quality of the motor vehicle. In the case of the damper stiffener disclosed in Japanese patent laid open publication No. 07-309252, because the damper stiffener is placed somewhat remote from the rubber holders, the displacement of the part supporting the damper 20 could not be effectively prevented.

In view of such problems of the prior art, a primary object of the present invention is to provide an automotive body structure that can effectively increase the rigidity of the part supporting a damper in the wheel house, and thereby improve the motion stability and ride quality of the automobile.

A second object of the present invention is .to provided an automotive body structure that can increase the rigidity of the wheel house with minimum amount of material and effort.

Viewed from one aspect, the present invention provides
an automotive body structure for supporting an upper end of a wheel suspension damper via an upper mounting rubber and a lower mounting rubber, comprising: a wheel house including an upper wall; an upper rubber holder attached to an upper surface of the upper wall of the wheel house and defining a retaining recess for receiving the upper mounting rubber; and a lower rubber holder attached to a lower surface of the upper wall of the wheel house and defining a retaining recess for receiving the lower mounting rubber; wherein at least one of the upper and lower rubber holders is provided with a closed cross section forming part extending from a peripheral part of the corresponding retaining recess and attached to a part of the wheel house so as to jointly form a closed cross section.

Thereby, the rigidity of the damper supporting portion in the wheel house is improved, the motion stability and ride quality are avoided from being impaired owing to the displacement of the part supporting the damper. Also, it can be accomplished by using a minimum amount of material and effort. In particular, the manufacture of the rubber holders is simplified, and attaching of the rubber holders to the wheel house is facilitated. The upper and lower rubber holders as well as other parts of the automotive body typically consist of stamp formed sheet metal such as steel, aluminum or other plates.

Preferably, the closed cross section forming part comprises an inboard part of the upper and/or lower rubber holder which is bent downwardly along a line extending in a fore-and-aft direction and attached to a side wall of the wheel house. Preferably, the upper wall of the wheel house comprises a damper base including a main portion and an elevated wall portion provided on an outboard side of the main portion, the elevated wall portion being raised relative to the main portion, and the closed cross section forming part comprises an outboard part of the upper and/or lower rubber holder which is attached to the elevated wall portion.

According to an arrangement that allows the spot welding process to be carried out in a favorable manner, the upper and lower rubber holders are each provided with a closed section forming part on an inboard part thereof which is bent downwardly along a line extending in a fore-and-aft direction and attached to a side wall of the wheel house, the lower ends of the downwardly bent parts of the closed section forming part extending in a fore-and-aft direction and being provided with wavy shaped edges which are 180 degree off phase relative to each other so that the downwardly projecting parts of the wavy shaped edges may be spot welded to the side wall of the wheel house at positions which are mutually offset from each other.

Certain preferred embodiments of the present invention will now be described by way of example only and with reference to the appended drawings, in which:
Figure 1 is a perspective view of an automobile embodying the present invention;
Figure 2 is an enlarged vertical sectional view showing the part of Figure 1 indicated by II;
Figure 3 is an enlarged fragmentary view seem from the direction indicated by III in Figure 1.
Figure 4 is a view similar to Figure 2 showing the second embodiment of the present invention; and
Figure 5 is a view similar to Figure 3 showing the second embodiment of the present invention.

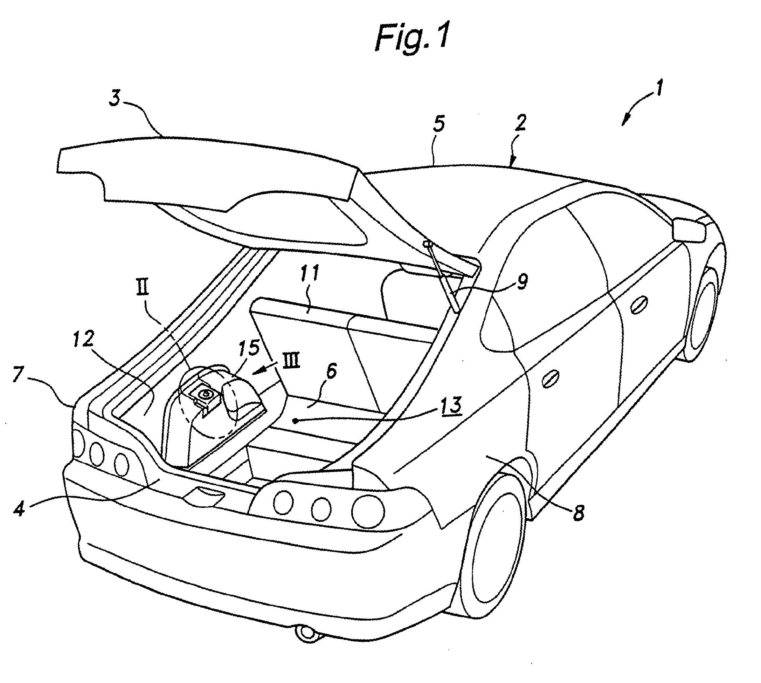

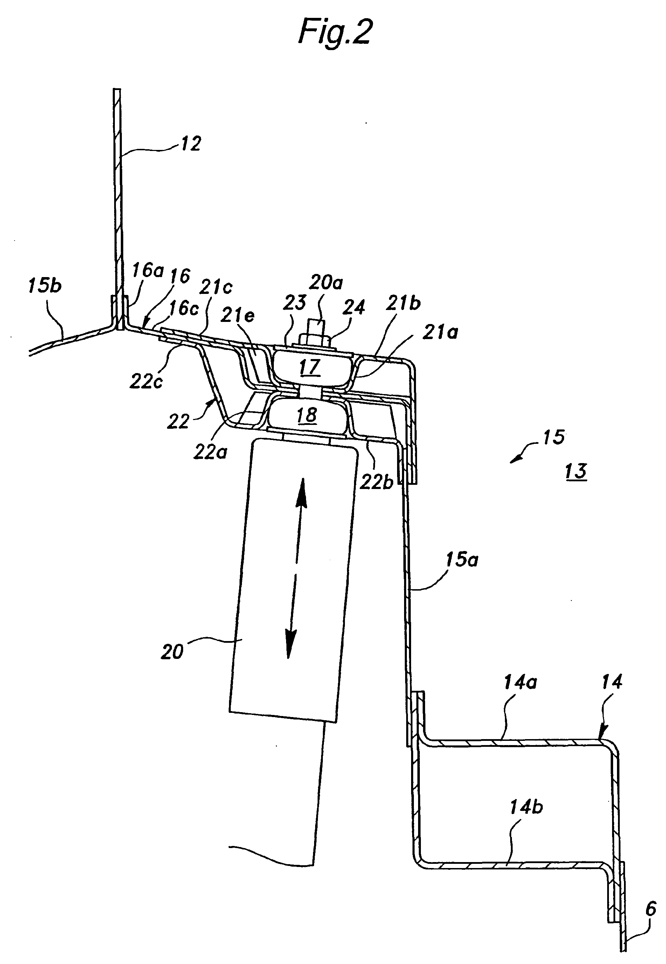

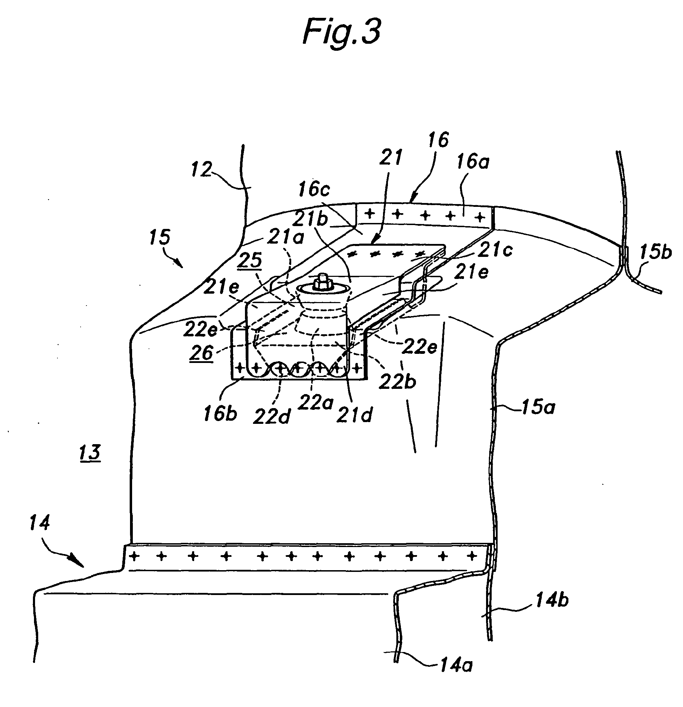

Figure 1 is a perspective view of an automotive body embodying the present invention, and Figure 2 is an enlarged vertical sectional view of a part of Figure 1 indicated by II while Figure 3 is an enlarged view as seem from the direction indicated by III in Figure 1.

Referring to Figure 1, the illustrated embodiment consists of four-door sedan in the form of a hatch back automobile 1 which is provided with a tailgate 3 in a rear end of a car body 2. The car body 2 consists of a monocoque body that is formed by spot welding together a rear panel 4, a roof panel 5, a rear floor panel 6 and a pair of outer panels 7 and 8. The tailgate 3 is attached to the rear end of the roof panel 5 via a hinge (not shown in the drawings) so as to swing upward around the hinge. A support strut 9 applies a force to the tailgate 3 to keep it open. In Figure 1, the carpet and trims in the trunk room are omitted from illustration to aid understanding.

Behind the rear seats 11 is defined a trunk room 13 by the rear floor panel 6, a pair of rear wheel houses 15 and a pair of rear inner panels 12. As shown in Figure 2, on each side end of the trunk room 13 is provided a floor frame 14 having a rectangular cross section and formed by spot welding a floor frame inner 14a and a floor frame outer 14b to each other. The rear floor panel 6 is spot welded to the inboard wall of the floor frame 14 and a wheel house inner 15a is spot welded to the outboard wall of the floor frame 14.

As shown in Figure 2 and 3, the wheel house inner 15a is spot welded to the wheel house outer 15b with the rear inner panel 12 interposed between them so as to form the wheel house 15. A damper base 16 (damper supporting portion) is attached to an upper part of the wheel house 15, and an upper end of a damper 20 is resiliently supported by this damper base 16 via an upper mounting rubber 17 and a lower mounting rubber 18.

The damper base 16 consists of a stamp formed steel plate, and is provided with an upper flange 16a extending upward from an outboard end thereof and spot welded to the rear inner panel 12, and a lower flange 16b extending downward from an inboard end thereof is spot welded to the wheel house inner 15a. The damper base 16 forms a part of the upper wall of the wheel house 15, and includes a damper mounting portion or main portion 16d supporting the upper end of the damper 20 and an elevated wall portion 16c provided on the outboard end of the main portion 16d and one step higher than the main portion 16d. The outboard end of the elevated wall portion 16c continues to the upper flange 16a, and the inboard end of the main portion 16d continues to the lower flange 16b.

To the damper base 16 are attached an upper rubber holder 21 provided with a retaining recess 21 a for retaining the upper mounting rubber 17 on an upper surface thereof and a lower rubber holder 22 provided with a retaining recess 22a for retaining the lower mounting rubber 18 on a lower surface thereof. A rod 20a of the damper 20 is passed through both the upper and lower mounting rubbers 17 and 18, and a nut 24 is threaded with this rod 20a via a washer 23.

A closed cross section forming part 21b having a substantially rectangular cross section extends radially from a part of the upper rubber holder 21 defining an open (upper) end of the retaining recess 21a, and a flange 21c extending from the outboard end of this closed cross section forming part 21b is spot welded to the elevated wall portion 16c of the damper base 16. The inboard end of the closed cross section forming part 21b is bent downward along a line extending in the fore-and-aft direction so as to form a downwardly extending flange 21d.
The lower end of the downwardly extending flange 2 1 d is spot welded to the lower flange 16b of the damper base 16. Thereby, as shown in Figure 2, a closed cross section 25 is defined between the closed cross section forming part 21b and the damper base 16 around the area surrounding the retaining recess 21 a. In the case of the first embodiment, the front and rear ends of the closed cross section forming part 21b are each provided with a downwardly extending vertical wall 21 e.

As for the lower rubber holder 22, a closed cross section forming part 22b having a substantially rectangular cross section extends radially from an open (lower) end of the retaining recess 22a, and a flange 22c extending from the outboard end of the closed cross section forming part 22b is spot welded to the elevated wall portion 16c of the damper base 16. The inboard end of the closed cross section forming part 22b is bent downward along a line extending in the fore-and-aft direction so as to define a downwardly extending flange 22d. The lower end of this flange 22d is spot welded to the wheel house inner 15a. Thereby, as shown in Figure 2, a closed cross section 26 is defined between the closed cross section forming part 22b and the damper base 16 around the area surrounding the retaining recess 22a. In the case of the first embodiment, the front and rear ends of the closed cross section forming part 22b are each provided with an upwardly extending vertical wall 22e. As shown in Figure 3, the lower ends of the downwardly extending flange 21d of the upper rubber holder 21 and the flange 22d of the lower rubber holder 22 that extend in the fore-and-aft direction are respectively provided with wavy shapes which are 180 degree off phase from each other so that the they may be spot welded to the wheel house inner 15a and damper base 16, respectively, at positions which are mutually offset from each other.

When an automobile travels over irregular road surfaces, the damper mounting portion 16d of the damper base 16 is subjected to a significant vertical load. In the case of the first embodiment, because the closed cross section forming parts 21b and 22b of the upper rubber holder 21 and lower rubber holder 22 define closed cross sections 25 and 26, respectively, in cooperation with the damper base 16, combined with the provision of the vertical walls 2 1 e and 22e in the upper and lower rubber holders 21 and 22, the damper base 16 is given with a high rigidity so that the reduction in motion stability and impairment of ride quality owing to the displacement of the point supporting the damper can be avoided as opposed to the prior art.

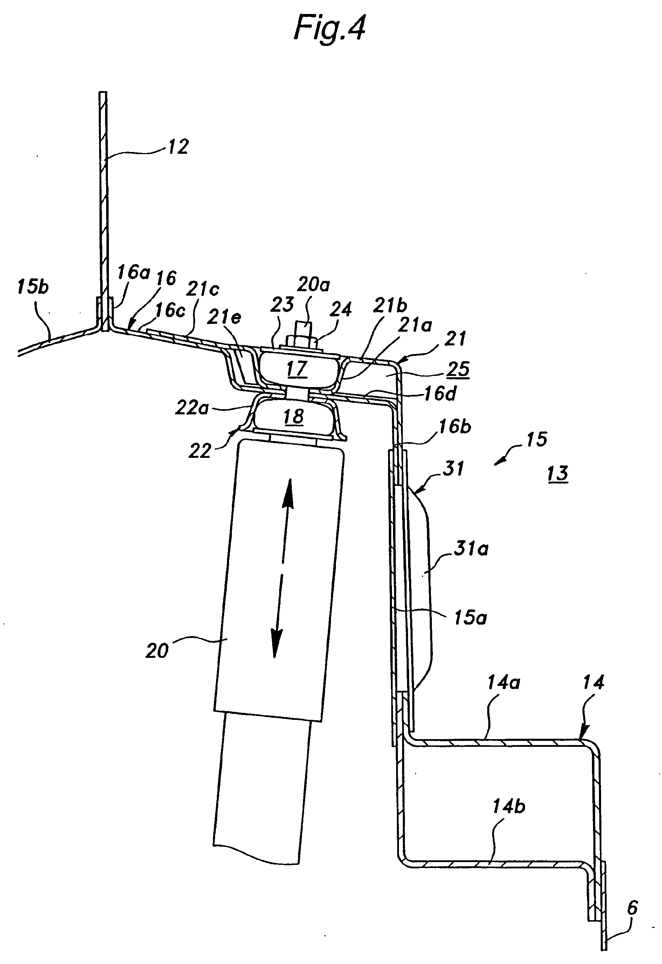

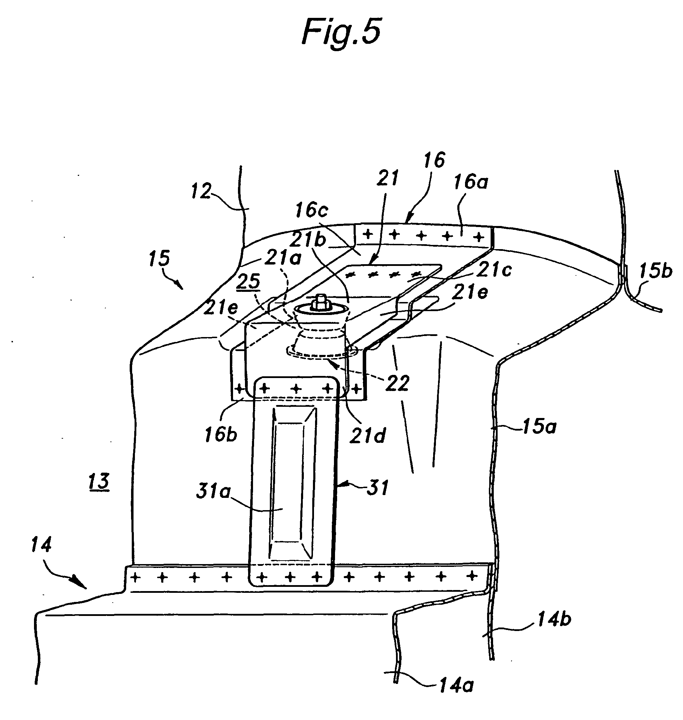

Figure 4 is a fragmentary vertical sectional view of an automotive body according to a second embodiment of the present invention, and Figure 5 is a fragmentary perspective view of the second embodiment.

The second embodiment differs from the foregoing first embodiment in that the closed cross section forming part is omitted from the lower rubber holder and a reinforcing stiffener is provided on a side wall of the wheel house. As shown in Figures 4 and 5, the lower rubber holder 22 of the second embodiment is cup-shaped in a conventional manner so as to simply retain the lower mounting rubber 18, and is not provided with a closed cross section forming part that would define a closed cross section in cooperation with the damper base 16. Also, in the second embodiment, a side wall of the wheel house 15 is provided with a stiffener 31 consisting of a stamp formed steel plate. The stiffener 31 is generally planar and provided with a central rib 31a. The upper end of the stiffener 31 is spot welded to the downwardly extending flange 21 d of the upper rubber holder 21, and the lower end of the stiffener 31 is spot welded to the floor frame 14 or the upper (outboard) flanges of the floor frame inner 14a and a floor frame outer 14b which are placed one over the other.

Owing to the particular structure of the second embodiment, the damper mounting portion or main portion 16d of the damper base 16 is firmly attached to the floor frame 14 so that not only the rigidity of the damper mounting portion 16d of the wheel house 15 but also the overall rigidity of the trunk room 13 is improved. Thereby, the torsional and bending deformations of the automotive body are effectively controlled with the result that motion stability and ride quality can be improved, and noises and vibrations can be reduced.

Although the present invention was described in terms of preferred embodiments of the present invention, the present invention is not limited by the illustrated embodiments, and can be modified in a wide ranging manner. For instance, the illustrated embodiment was applied to the rear body structure of a four door sedan, but may also be applied to the rear body structure of other types of motor vehicles. In addition to the arrangements disclosed in the foregoing embodiments, it is also possible to provide a closed cross section forming part only to the lower rubber holder. Also, only the lateral ends of the upper rubber holder and/or the lower rubber holder were attached to the wheel house, but the front and rear ends (vertical walls) may also be attached to the wheel house. The upper rubber holder and the lower rubber holder were spot welded to the damper base in the foregoing embodiments, but may also be attached thereto by using rivets or the likes. Furthermore, the specific shapes of the rubber holders and the damper stiffener can be freely modified without departing from the scope of the present invention.

## Claims

1. An automotive body structure for supporting an upper end of a wheel suspension damper via an upper mounting rubber (17) and a lower mounting rubber (18), comprising:
a wheel house (15) including an upper wall;
an upper rubber holder (21) attached to an upper surface of the upper wall of the wheel house and defining a retaining recess (2 1 a) for receiving the upper mounting rubber; and
a lower rubber holder (22) attached to a lower surface of the upper wall of the wheel house and defining a retaining recess (22a) for receiving the lower mounting rubber;
**characterised in that** at least one of the upper and lower rubber holders is provided with a closed cross section forming part (216,226) extending from a peripheral part of the corresponding retaining recess and attached to a part of the wheel house so as to jointly form a closed cross section (25, 26).

2. The automotive body structure according to claim 1, wherein the upper and lower rubber holders consist of stamp formed sheet metal.

3. The automotive body structure according to claim 1 or claim 2, wherein the closed cross section forming part comprises an inboard part (21d, 22d) of the upper and/or lower rubber holder which is bent downwardly along a line extending in a fore-and-aft direction and attached to a side wall of the wheel house.

4. The automotive body structure according to claim 1, 2 or 3, wherein the upper wall of the wheel house comprises a damper base (16) including a main portion (16d) and an elevated wall portion (16c) provided on an outboard side of the main portion, the elevated wall portion being raised relative to the main portion, and the closed cross section forming part comprises an outboard part (21c, 22c) of the upper and/or lower rubber holder which is attached to the elevated wall portion.

5. The automotive body structure according to any preceding claim, further comprising a rear floor panel (6) defining a trunk room jointly with the wheel house, a floor frame (14) extending in a fore-and-aft direction between the wheel house and the rear floor panel and a reinforcing stiffener (31) attached to both the side wall of the wheel house and the rear floor frame.

6. The automotive body structure according to any preceding claim, wherein the upper rubber holder (21) is provided with a downwardly extending wall (2 1 e) at least in one of a front and rear end thereof.

7. The automotive body structure according to any preceding claim, wherein the lower rubber holder (22) is provided with an upwardly extending wall (22e) at least in one of a front and rear end thereof.

8. The automotive body structure according to any preceding claim, wherein the upper and lower rubber holders are each provided with a closed section forming part (21b, 22b) on an inboard part thereof (21 d, 22d) which is bent downwardly along a line extending in a fore-and-aft direction and attached to a side wall of the wheel house, the lower ends of the downwardly bent parts of the closed section forming part extending in a fore-and-aft direction and being provided with wavy shaped edges which are in antiphase
so that the downwardly projecting parts of the wavy shaped edges may be spot welded to the side wall of the wheel house at positions which are mutually offset from each other.

## Patentansprüche

1. Kraftfahrzeug-Körperstruktur zum Haltern eines oberen Endes eines Radaufhängungsstoßdämpfers über einen oberen Montagegummi (17) und einen unteren Montagegummi (18), umfassend:
einen Radkasten (15), welcher eine obere Wand einschließt;
einen oberen Gummihalter (21), der an einer oberen Fläche der oberen Wand des Radkastens befestigt ist und eine Rückhalteausnehmung (21a) zum Aufnehmen des oberen Montagegummis festlegt; und
einen unteren Gummihalter (22), der an einer unteren Fläche der oberen Wand des Radkastens befestigt ist und eine Rückhalteausnehmung (22a) zum Aufnehmen des unteren Montagegummis festlegt;
**dadurch gekennzeichnet ist, dass** der obere Gummihalter oder/und der untere Gummihalter mit einem einen geschlossenen Querschnitt bildenden Teil (21b, 22b) versehen ist, der von einem Umfangsabschnitt der entsprechenden Rückhalteausnehmung ausgeht und derart an einem Teil des Radkastens befestigt ist, dass er mit diesem gemeinsam einen geschlossenen Querschnitt (25, 26) bildet.

2. Kraftfahrzeug-Körperstruktur gemäß Anspruch 1, bei welcher die oberen und unteren Gummihalter aus pressgeformtem Metallblech gebildet sind.

3. Kraftfahrzeug-Körperstruktur gemäß Anspruch 1 oder Anspruch 2, bei welcher der einen geschlossenen Querschnitt bildende Teil einen Innenteil (21d, 22d) des oberen und/oder unteren Gummihalters umfasst, der entlang einer sich in einer Vorwärts-Rückwärts-Richtung erstreckenden Linie nach unten gebogen und an einer Seitenwand des Radkastens befestigt ist.

4. Kraftfahrzeug-Körperstruktur gemäß Anspruch 1, 2 oder 3, bei welcher die obere Wand des Radkastens eine Stoßdämpferbasis (16) umfasst, die einen Hauptabschnitt (16d) und einen auf einer Außenseite des Hauptabschnitts vorgesehenen, erhöhten Wandabschnitt (16c) einschließt, wobei der erhöhte Wandabschnitt relativ zum Hauptabschnitt angehoben ist, und der einen geschlossenen Querschnitt bildende Teil einen Außenteil (21c, 22c) des oberen und/oder unteren Gummihalters umfasst, der an dem erhöhten Wandabschnitt befestigt ist.

5. Kraftfahrzeug-Körperstruktur gemäß einem der vorstehenden Ansprüche, die ferner eine hintere Bodenplatte (6) umfasst, die gemeinsam mit dem Radkasten einen Kofferraum festlegt, einen sich zwischen dem Radkasten und der hinteren Bodenplatte in einer Vorwärts-Rückwärts-Richtung erstreckenden Bodenrahmen (14) sowie eine verstärkende Versteifungsvorrichtung (31), die sowohl an der Seitenwand des Radkastens als auch am hinteren Bodenrahmen befestigt ist.

6. Kraftfahrzeug-Körperstruktur gemäß einem der vorstehenden Ansprüche, bei welcher der obere Gummihalter (21) in seinem vorderen oder/und seinem hinteren Ende mit einer sich nach unten erstreckenden Wand (21 e) versehen ist.

7. Kraftfahrzeug-Körperstruktur gemäß einem der vorstehenden Ansprüche, bei welcher der untere Gummihalter (22) in seinem vorderen oder/und seinem hinteren Ende mit einer sich nach oben erstreckenden Wand (22e) versehen ist.

8. Kraftfahrzeug-Körperstruktur gemäß einem der vorstehenden Ansprüche, bei welcher der obere und der untere Gummihalter an ihrem jeweiligen Innenteil (21d, 22d) mit einem einen geschlossenen Querschnitt bildenden Teil (21b, 22b) versehen sind, der entlang einer sich in einer Vorwärts-Rückwärts-Richtung erstreckenden Linie nach unten gebogen und an einer Seitenwand des Radkastens befestigt ist, wobei sich die unteren Enden der nach unten gebogenen Teile des einen geschlossenen Querschnitt bildenden Teils in einer Vorwärts-Rückwärts-Richtung erstrecken und mit wellenförmigen Rändern versehen sind, die derart gegenphasig verlaufen, dass die nach unten vorspringenden Teile der wellenförmigen Ränder an bezüglich einander versetzten Positionen an die Seitenwand des Radkastens punktgeschweißt werden können.

## Revendications

1. Structure de carrosserie automobile destinée à supporter une extrémité supérieure d'un amortisseur de suspension de roue via un caoutchouc de montage supérieur (17) et un caoutchouc de montage inférieur (18), comportant :
un passage de roue (15) incluant une paroi supérieure,
un support de caoutchouc supérieur (21) fixé sur une surface supérieure de la paroi supérieure du passage de roue et définissant un évidement de retenue (21a) destiné à recevoir le caoutchouc de montage supérieur, et
un support de caoutchouc inférieur (22) fixé sur une surface inférieure de la paroi supérieure du passage de roue et définissant un évidement de retenue (22a) destiné à recevoir le caoutchouc de montage inférieur,
**caractérisée en ce qu'**au moins un des supports de caoutchouc supérieur et inférieur comporte une partie formant section transversale fermée (21b, 22b) s'étendant à partir d'une partie périphérique de l'évidement de retenue correspondant et fixée sur une partie du passage de roue de manière à former conjointement une section transversale fermée (25, 26).

2. Structure de carrosserie automobile selon la revendication 1, dans laquelle les supports de caoutchouc supérieur et inférieur sont constitués de tôle métallique estampée.

3. Structure de carrosserie automobile selon la revendication 1 ou la revendication 2, dans laquelle la partie formant section transversale fermée comporte une partie intérieure (21d, 22d) du support de caoutchouc supérieur et/ou inférieur qui est bombée vers le bas le long d'une ligne s'étendant dans une direction avant-arrière et fixée sur une paroi latérale du passage de roue.

4. Structure de carrosserie automobile selon la revendication 1, 2 ou 3, dans laquelle la paroi supérieure du passage de roue comporte une base d'amortisseur (16) incluant une partie principale (16d) et une partie de paroi élevée (16c) agencée sur un côté extérieur de la partie principale, la partie de paroi élevée étant surélevée par rapport à la partie principale, et la partie formant section transversale fermée comporte une partie extérieure (21c, 22c) du support de caoutchouc supérieur et/ou inférieur qui est fixée sur la partie de paroi élevée.

5. Structure de carrosserie automobile selon l'une quelconque des revendications précédentes, comportant en outre un panneau de plancher arrière (6) définissant un espace de coffre conjointement avec le passage de roue, un châssis de plancher (14) s'étendant dans une direction avant-arrière entre le passage de roue et le panneau de plancher arrière, et un raidisseur de renfort (31) fixé à la fois sur la paroi latérale du passage de roue et le châssis de plancher arrière.

6. Structure de carrosserie automobile selon l'une quelconque des revendications précédentes, dans laquelle le support de caoutchouc supérieur (21) comporte une paroi s'étendant vers le bas (21e) au moins dans l'une de ses extrémités avant et arrière.

7. Structure de carrosserie automobile selon l'une quelconque des revendications précédentes, dans laquelle le support de caoutchouc inférieur (22) comporte une paroi s'étendant vers le haut (22e) au moins dans l'une de ses extrémités avant et arrière.

8. Structure de carrosserie automobile selon l'une quelconque des revendications précédentes, dans laquelle les supports de caoutchouc supérieur et inférieur comportent chacun une partie formant section fermée (21b, 22b) sur une de leurs parties intérieures (21d, 22d) qui est bombée vers le bas le long d'une ligne s'étendant dans une direction avant-arrière et fixée sur une paroi latérale du passage de roue, les extrémités inférieures des parties bombées vers le bas de la partie formant section fermée s'étendant dans une direction avant-arrière et comportant des bords à forme ondulée qui sont en antiphase de telle sorte que les parties faisant saillie vers le bas des bords à forme ondulée peuvent être soudées par points sur la paroi latérale du passage de roue dans des positions qui sont mutuellement décalées les unes des autres.
